(19) Europäisches Patentamt European Patent Office Office européen des brevets

(11) **EP 4 745 562 A1**

(12) **EUROPEAN PATENT APPLICATION**

(43) Date of publication:
20.05.2026 Bulletin 2026/21

(21) Application number: 24020332.3

(22) Date of filing: **19.11.2024**

(51) International Patent Classification (IPC):
**G01N 21/552** (2014.01)    **G01N 21/77** (2006.01)

(52) Cooperative Patent Classification (CPC):
**G01N 21/553**; G01N 21/7743

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.11.2024 RO 202400706**

(71) Applicant: **Nstitutul National de Cercetare-Dezvoltare Pentru Optoelectronica INOE 2000 077125 Magurele, jud. Ilfov (RO)**

(72) Inventors:
• **POPESCU, Aurelian**
  **Magurele, Jud Ilfov (RO)**
• **SAVASTRU, Dan**
  **Bucuresti (RO)**

(74) Representative: **Strenc, Alexandru Cristian**
  **Strenc Solutions for Innovation S.R.L.**
  **Str. Lujerului Nr. 6**
  **Bloc 100 Sc. B Et 3, Apt. 56 Sector 6**
  **06631 Bucharest (RO)**

Remarks:
Amended claims in accordance with Rule 137(2) EPC.

(54) **PLANAR STRUCTURE WITH SURFACE PLASMON RESONANCE HAVING A RELIEF DIFFRACTION GRATING AND PROCESS OF PRODUCING THAT STRUCTURE**

(57)    The invention relates to surface plasmon resonance (SPR) structures for optical sensors and consists in generating surface plasmon-polaritonic waves. The waves are confined at the interface between the metal film and the ambient medium, and the propagation constant depends on its refractive index.

The method of making the structure according to the invention consists in making on a transparent support a transmission diffraction grating that directs the beam at the plasmon resonance angle. The grating is made in a photoresist layer on a transparent plane-parallel lamella (substrate) which, using immersion oil, is attached with the opposite side to the substrate containing on the outside a thin metal film.

The SPR structure consists of a thin metal film (2) deposited on one side of the substrate (4). The other side of the substrate contains a relief diffraction grating (5). The structure with the metal film in contact with the ambient environment (MA) acts as an optical sensor that reacts to changes in the refractive index of the (MA). The flatness of the structure reduces manufacturing costs, reduces the size of the sensors and allows the creation of multiple sensors integrated on a single substrate.

Fig. 5

EP 4 745 562 A1

# Description

A specific technical field to which this invention relates, is the chemical or biological optical sensors, in particular sensors based on surface plasmon resonance (SPR) and structures in which the surface plasmon resonance is achieved. The technical solution of the SPR structure according to the invention leads at improving the characteristics of the transducer element of an optical sensor that transforms the changes in the refractive index into changes in the intensity of the light captured by the photodetector. The SPR structure allows the identification of various chemical and biological substances in real time. Implementation of the technical solution leads to the miniaturization and cheapening of the devices due to the planar proposed structure and allows the increasing of the resolution power of plasmonic sensors.

Optical sensors are sensors of various physical quantities transposed into variations in light intensity. One of the parameters specific to chemical or biological substances is the refractive index and one of the approaches used in optical sensors is the SPR sensitive to refractive index. SPR consists of a strong light coupling an electromagnetic wave with surface plasmon polariton waves (SPP).

A feature of surface plasmon polariton waves is the dispersion equation that represents the relationship between the frequency $\omega$ and the wave vector k. This is obtained from solving the Maxwell equation for the interface of two optical media (reference (1)):

$$k_{spp} = k_o \sqrt{\frac{\varepsilon_m \varepsilon_d}{\varepsilon_m + \varepsilon_d}} \qquad (1)$$

where:

$k_{SPP}$ - is the polaritonic plasmon wave vector; $\varepsilon_m$ and $\varepsilon_d$ are the dielectric constants of the metal and respectively of the dielectric in contact, that depend on the wavelength of the light.

$\varepsilon = n^2$, where n is the refractive index of the material. For air $\varepsilon = n = 1$. In a medium with refractive index $n$ the wave vector of the light $k_L = (n \cdot \omega/c)$, where $\omega$ is the angular frequency of light and c is the speed of light.

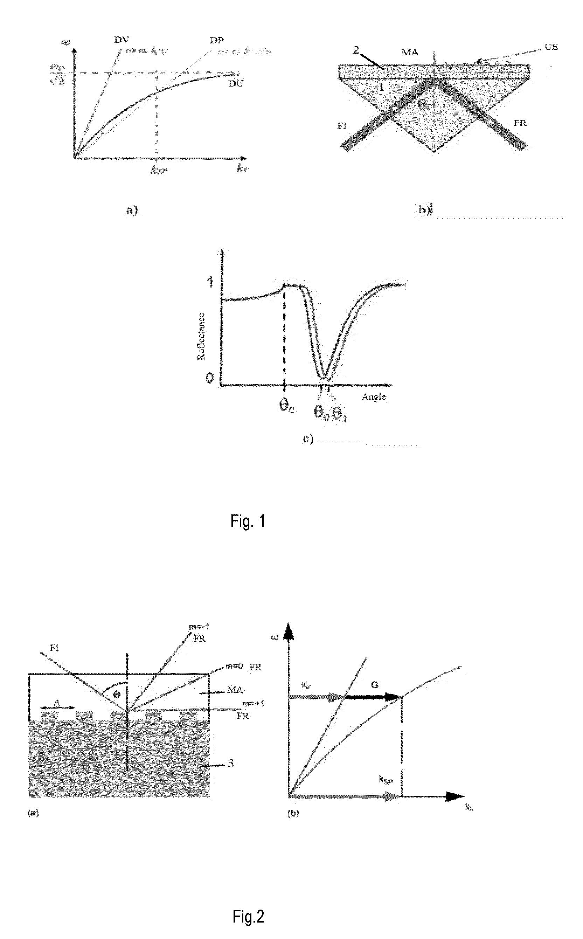

The interaction of light with the metal-dielectric structure is exemplified in Fig.1a. The strong interaction between the electromagnetic wave (light) and the plasmon-polaritonic wave occurs when, in addition to the frequencies $\omega_0 = \omega_{SPP}$, the wave vectors (momentum) are equal $K_L = K_{SPP}$, i.e. the intersection point of the curves of the light dispersion and the plasmon-polaritonic waves. $K_L$ is the component of the light wave vector parallel to the interface along which the plasmon-polaritonic wave propagates.

In practice, this condition means that the dispersion curves for light and the plasmon polaritonic wave must intersect. Normally this does not occur, meaning that the dispersion curves for light in free space (Fig. 1a, curve DV) do not intersect with the curve of the plasmon-polaritonic wave (Fig. 1a, curve DU) that may exist at the metal-air interface.

One of the widely applied methods in achieving surface plasmon resonance is the method of attenuated total internal reflection proposed by Kretschmann. In the Kretschmann configuration shown in Fig. 1b, the thin metal film 2 is deposited at the base of a transparent glass prism 1 with refractive index n. The role of the prism is that the thin metal film can be illuminated through the side of the prism at an angle of incidence $\theta i$ that exceeds the critical angle $\theta c$ of the total internal reflection. When the angle of incidence $\theta i > \theta c$ exceeds the critical value corresponding to the angle of total reflection, light tunneling through the metal film and its penetration into the ambient environment occurs, creating an evanescent wave. The evanescent wave is strongly confined to the surface of the metal film with a penetration depth below half a wavelength, which is 300-500 nm. The resonance value $\theta o$ for the incidence angle $\theta i$ corresponds to the condition: $k \cdot n_p \cdot \sin\theta_0 = k_{SPP}$, where $k_{SPP}$ is calculated from the dispersion equation (1).

The condition for a total reflection corresponds to the expression: $\sin \theta c = n_a / n_p$, where $n_p$ is the refractive index of the prism, and $n_a$ is the refractive index of the ambient medium. For the ambient medium air $n_a = 1$ and using a prism made of optical glass with refractive index $n_p = 1.51$ we will obtain the critical angle value of 41.5°. As ambient medium we often encounter aqueous solutions of some chemicals or other liquids having a refractive index lower than that of the prism. Taking into account that for pure water the refractive index is $n_a = 1.33$, we will obtain in this case the critical angle value of 61.7 degrees. Exact calculations indicate values of the resonance angle $\theta_0$ (Fig. 1c) having 2-3 degrees higher than the angle of total reflection. The angle at the base of the prism is chosen approximately equal to the resonance angle so that the light beam falls close to the normal on the lateral face of the prism, subsequently making small adjustments to the prism by precisely rotating the table on which the SPR structure is mounted.

The coupling of light with the surface plasmon wave occurs for incidence angles $\theta_i > \theta_c$ and is called surface plasmon resonance (Fig. 1c). When the incidence angle corresponds to the resonance angle, a collapse of the reflected light intensity to zero, occurs.

Small changes in the refractive index of the analyte in the environment lead to significant changes in the light intensity. When the incidence angle satisfies the resonance condition $\theta_0$, the light reflection becomes almost zero. The position of the curve corresponding to zero reflectance (Fig. 1c) shifts to $\theta_1$ when the index of the environment changes. SPR allows the realization of transducers of the change in the refractive index into an optical signal. Thus, detectable changes in the resonance angle shift occur for very small changes in the refractive index of the environment of about $10^{-5}$.

In the state of the art, technical solutions regarding the use of light coupling with prisms to create SPR structures are known and patented.

In the patent document US2008198383A1 -Horizontal surface plasmon resonance sensor, the invention discloses an instrument for performing chemical and biological analysis of a sample using surface plasmon resonance. In the SPR configuration, a prism is used for coupling, and the angle of incidence is varied by rotating the optical element of the prism by x degrees, the detector must rotate by 2x degrees to follow the beam. Many SPR systems are built using this method.

In the patent document WO0142768A1 -Surface plasmon resonance-, the technical solution according to the invention, presents a surface plasmon resonance apparatus for detecting a soluble analyte characterized in that it comprises: (a) a sensor including a prism that provides a metallized sensor surface capable of binding the analyte: (b) an excitation beam of the light source for directing to the sensor surface: (c) at least one detector capable of detecting light. The modification of the beam is carried out in a controlled manner, such that the level of light emitted by the sensor surface is substantially improved.

In the patent document KR100876608B1 -Surface plasmon resonance sensor using rotating mirror-, surface plasmon resonance (SPR) sensors with rotating mirrors include: an incident light source section for emitting a laser as incident light; a polarizer for polarizing the incident light; a rotating cylindrical mirror that reflects the polarized incident light and emits the light as a disk-shaped light; a cylindrical lens through which light passing through the shielding film is focused; a thin metal film on which the incident light is focused by a cylindrical lens. Prism coupling is also applied in commercial SPR devices used for real-time characterization of chemical and bio-processes, (for example, the Biacore™ 8K+ SPR model (reference (5)).

The disadvantages of these solutions are that the SPR structure with a prism:

- removes the planarity of the structure, which leads to increased execution costs,
- due to the prism, multiple SPR structures cannot be multiplied on a single substrate,
- for the realization of instruments and sensors, mechanical scanning elements are required, which increase the costs and mass of the devices. (Thus, known SPR devices are stationary, having a mass of 50-60 kg. The mass of the above-mentioned model reaches even 160 kg, and the price of the devices exceeds $100,000).

More recently, solutions are being sought for the realization of planar SPR devices. One way is to use diffraction gratings. In Fig. 2 (a, b) the principle of realizing SPR structures with a diffraction grating made on the surface of a metal is explained.

As is known, the diffraction of light is determined by the equation:

$$\sin\alpha - \sin\beta = \pm m\lambda_0/\Lambda \qquad (2)$$

where a - is the angle of incidence of light; $\beta$ - the angle under which the diffraction maximum "m" propagates; "m" is an integer that can have values +/- (1); +/- (2) etc. $\Lambda$ is the period of the diffraction grating (Fig. 2a). $\lambda_0$ is the wavelength of light. The structure is planar. For thin diffraction gratings, the light intensity is distributed in several maxima m=0; m=+/-1; m=+/-2 etc. Their number depends on the period of the grating $\Lambda$. For example, for the period $\Lambda = 0.25\lambda$, we will have a total of 9 diffraction maxima, of which only one corresponds to the SPR plasmonic resonance conditions, namely the one for which the condition is satisfied: $k_x + G = k_{spp}$ (see Fig. 2b), where $k_x = k_0 \cdot n \cdot \sin\beta$. The lattice vector G depends on its period and is calculated as $G = 2\pi/\Lambda$. By selecting the lattice period and the angle of incidence, these conditions can be ensured.

Technical solutions are known in which diffraction gratings are used on the surface of the metal or in the metal film.

In the patent document US2015124254A1 -Electro-Optic Grating-Coupled Surface Plasmon Resonance- the architecture of the SPR chip is presented which consists of an inert substrate on which a conductive layer is deposited, on which a relief or otherwise patterned electro-optic polymer is deposited and on which a thin layer of gold is placed. In this embodiment, each of the two conductive layers is in electrical contact with the contact pads, which interact with a software-controlled voltage generator. Overall, the SPR structure is planar, contains a relief diffraction grating made in a thin layer of polymer, and the interrogation laser beam propagates through the ambient environment subject to characterization.

In another patent document US2008316490A1 -Planar surface plasmon resonance detector- the invention discloses a planar surface detector, in which a periodic metallic structure (diffraction grating) is deposited on a common glass substrate to replace prisms and generate surface plasmon resonance (SPR). The invention can facilitate a low-cost, compact and portable planar surface plasmon resonance detector and can popularize the planar surface plasmon resonance detector. Also in this solution, the diffraction grating is a front-illuminated reflection type, and the interrogation laser beam propagates through the ambient medium.

These solutions, based on relief diffraction gratings that work in reflection and are made on the surface of the metal in contact with the environment, have the following drawbacks:

- the technological relief grating can be made as a "thin" type that creates several diffraction maxima, each with low intensity. Since the SPR resonance is ensured by only one of the maxima, the others only create false signals in the detector;
- the interrogation light incident on the surface of the SPR structure propagates through the ambient environment to be investigated (analyte). This is a major drawback, since the analyte, whether chemical or biological, can scatter or absorb the interrogation light, which leads to a decrease in the sensitivity of the sensor;
- as established by experimental research, the relief of the metal surface on which the coupling of light with the plasmon-polaritonic wave takes place is accompanied by a broadening of the resonance peak and, respectively, a decrease in the sensitivity of sensors of this type.

In order to eliminate these shortcomings, methods of coupling light with SPP waves were sought, in which the illumination of the structure is done from behind so that the beam does not propagate through the ambient environment. We could not identify patents, but two relevant documents published in specialized journals were highlighted.

Thus, in the bibliographic reference (2) is proposed a dielectric diffraction grating that can efficiently launch surface plasmon resonance (SPR) modes on the other side of the flat metal films, which is similar to the coupling mechanism through a conventional prism. Very important, this structure can excite SPR under normal incident light, which is particularly suitable for integration with optical fiber ends. It is recommended for applications in portable systems.

The proposed technological process is presented only at conceptual level and has not been experimentally realized.

This includes:

a). firstly, a 50 nm thick silver film is deposited on a glass substrate;
b). then a 350 nm thick monocrystalline silicon (Si) film is deposited;
c). there are used known nanofabrication processes. For example, it is used optical interference photoresist lithography through which, after development, it is obtained a diffraction grating with surface relief;
d). an epoxy resin is impregnated in the formed profile by polymerization with UV rays, which, after peeling, forms the second substrate;
e). the two layers (Ag and Si) are peeled off from the glass substrate, remaining attached to the epoxy substrate. Finally, this represents the SPR structure in which the illumination is performed from the back;

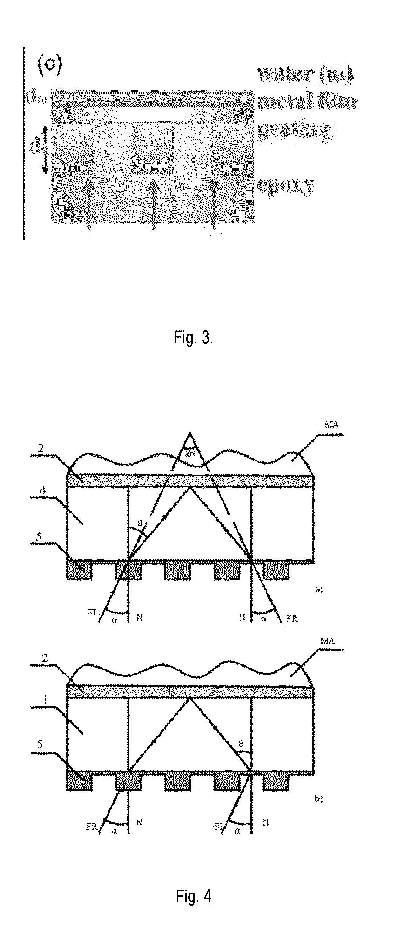

The method proposed in the bibliographic reference (2) (see Fig. 3) has some advantages such as:

- the diffraction grating is spatially separated from the metal film,
- the illumination is done behind the SPR structure, so it does not have to propagate into the ambient environment,
- the SPR structure is a planar one.

In the bibliographic reference (3) an SPR sensor is proposed that ensures the coupling of light with plasmon-polaritonic waves on the surface of a thin metal layer and diffraction gratings spatially spaced from this metal film. The metal film is flat, without roughnesses that diminish the characteristics of the structure used as an SPR sensor. The concept of this architecture has also been demonstrated experimentally. The diffraction grating is spaced from the gold film on the interface of which the coupling of light with plasmon-polaritonic waves takes place. However, the diffraction grating formation technology proposed in reference (3) is just as complicated and unreliable as the one proposed in reference (2).

Disadvantages of these solutions consist of the following:

- the need to peel off the SPR structure initially created on a glass substrate and transfer it to a substrate obtained by polymerizing epoxy resin so that the surface of the metal film be in contact with the ambient environment;
- the technological process involved is complicated and will encounter difficulties in the reproducibility and quality of the SPR structure;
- the method presents difficulties in achieving a perfectly homogeneous structure given that the SPR structure is embedded in a new substrate formed by UV-polymerized resin, and this undermines the resolution capacity of the SPR sensors.

The technical problem that the present invention aims to solve consists in developing a planar surface plasmon resonance (SPR) structure, which allows the illumination of the structure from behind, so that the interrogation light does not propagate through the environment under investigation, the SPR structure being made based on a simple and reliable technological process so that the SPR structure ensures good resolution of the sensors that use the SPR principle.

The technical solution to the technical problem solved by this invention eliminates the above disadvantages by developing an SPR structure in which for coupling light with the surface plasmon-polaritonic wave under resonance conditions it is used a transmission diffraction grating with surface relief made in a transparent optical film with photoresist properties deposited on one side of the substrate. On the other side of the substrate, a thin metal film is deposited in contact with the ambient environment to be investigated. The period of the diffraction grating is calculated so that for the desired propagation angle of the light beam, the incidence of light on the thin metal film under the plasmonic resonance angle is ensured.

The SPR resonant structure, according to the invention, consists of an optical substrate having a metal film deposited on one side and a diffraction grating made in relief of transparent material formed on the other side of the substrate. The side with the thin metal film represents the active part of the sensor (the front side) and the side with the diffraction grating represents the back side of the SPR sensor. On the back side are the light source and the detector of the intensity of the light reflected by the SPR structure.

The process of making the SPR structure, according to the invention, consists in obtaining from transparent optical glass a substrate with flat surfaces using grinding and polishing or casting from a piece of solid glass. The thin metal film on the surface of the substrate is obtained by known vacuum deposition processes. The photoresist is applied by centrifugation (spin-coating), a common method for nanofabrication technologies. By known processes, the photoresist is illuminated through the mask and corroded to obtain the diffraction grating with the period corresponding to the calculations.

The technical solution according to the invention presents the following advantages:

- it allows to achieve the conditions for surface plasmon resonance using a diffraction grating in transmission with backlighting of the SPR structure, and thus, the ambient environment does not affect the parameters of the plasmonic sensors;
- the SPR structure with diffraction grating works like the conventional scheme with a coupling prism, but has a planar configuration. This fact allows for the miniaturization of sensors, the multiplication of several sensors on the same support using gratings with different periods;
- the metal film on the surface of which the SPR coupling is performed is smooth since it is not subjected to subsequent technological procedures;
- the diffraction grating is spatially separated from the metal film, does not affect its quality and performs the same function as the coupling prism in conventional schemes;
- the proposed SPR structure has a simple manufacturing technology;
- the dimensions of the SPR structure are small since the structure is planar, which allows the creation of cheap and portable devices.

Several examples of embodiments of the invention are given below in connection with figures 1...6 which represent:

Fig. 1. - Illustration of the phenomenon of SPR using prism coupling.
Fig. 2. - Illustration of the role of the diffraction grating for coupling with surface plasmon-polaritonic waves.
Fig. 3. - SPR structure with diffraction grating made using nano-lithography technologies.
Fig. 4. - Illustration of light diffraction on the diffraction grating in transmission with a raised profile and reflection from the SPR structure.
Fig. 5. - Scheme of the SPR structure according to the invention.
Fig. 6. - Illustration of the process for making the SPR structure.

In effect, the figures 1...3 consider elements known from the aforementioned state of the art, necessary for defining the technical solution specific to the invention.

Thus, in Fig.1 a) we present: the dispersion curve (DV) for light in free space; the dispersion curve (DP) for light in a prism with refractive index n; the dispersion curve (DU) for the surface plasmon-polaritonic wave (k). The intersection of the curves (DP) and (DU) corresponds to the resonance conditions.

Fig. 1 b) illustrates the Kretschmann scheme for coupling light with a polaritonic plasmon wave using a prism and exciting surface plasmons by total internal reflection of light, where: FI - is the incident beam, FR - the reflected beam, 1 - glass prism, 2 - thin metal film, MA - ambient medium, UE - evanescent wave corresponding to the surface plasmon wave. The thickness of the metal film is chosen so that the film is semi-transparent. For gold films this is 40-50 nm.

Fig.1 c) illustrates the reflection of light in SPR structures. Under resonance conditions $\theta = \theta_0$ the intensity of light reflected by the plasmonic structure becomes zero. When the refractive index changes, the resonance angle shifts to the value $\theta_1$. The resonance angle is greater than the angle $\theta_c$ of total reflection.

In Fig. 2 a), is presented the planar SPR structure with a thin diffraction grating made on the surface of a metal plate. The incident light beam FI passes through the ambient medium MA corresponding to the front illumination. The grating produces, in addition to the specular reflection, several diffraction maxima FR depending on the period. Only one of them ensures the coupling with the polaritonic plasmon wave. The condition of plasmonic resonance for the coupling with the diffraction grating made on the metal surface is $k_x + G = k_{sp}$ (Fig. 2b).

In the SPR structure with a diffraction grating made by nano-lithography technologies in Fig. 3, taken from bibliographic reference (2), the illumination is done from behind through a substrate obtained by UV polymerization of epoxy resin. The technological process contains many manufacturing steps and is a complicated one.

Fig. 4 illustrates the physical effect used in the present invention, namely the diffraction of light on the transmission diffraction grating with a raised profile and the reflection on the SPR structure.

Fig. 4 b) illustrates the diffraction of light in the maximum m = +1. The angle α is on the same side of the normal. The reflection FR is exactly in the opposite direction to the incident ray FI. The geometry is favorable for the situation when the light exits the optical fiber, so it will also return to the optical fiber. Thus, it is possible to create networks of SPR sensors coupled with optical fiber that allow measurements at great distances.

Fig. 4 a) shows the diffraction in the maximum m = -1. The angles α at the entrance of the FI ray and at the exit of the FR ray are on the opposite side of the normal N. The angle between the incident and reflected rays by the SPR structure is 2α. If the incident ray is set at an angle of 45 degrees, then the angle between the light source and the photodetector is 90 degrees as in the case of coupling with a 90-degree prism.

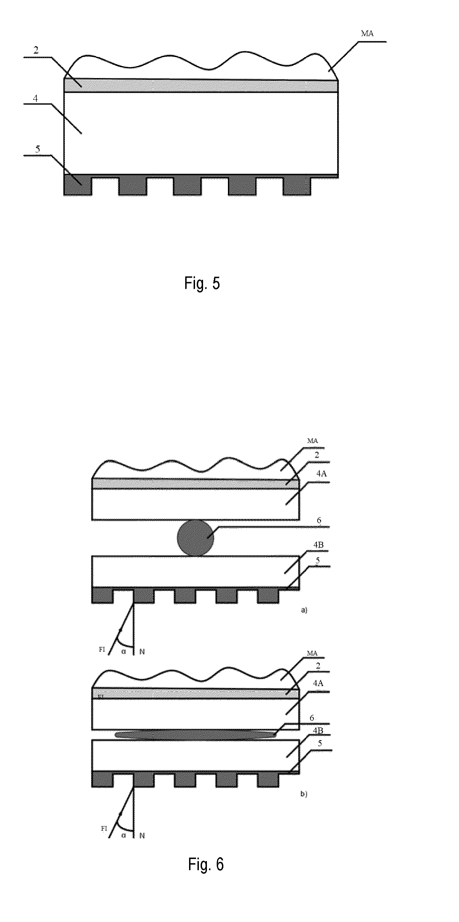

The SPR structure according to the present invention (Fig. 5), contains a thin metal film 2 deposited on the front side of an optical substrate made of optical glass of quality 4, and on the back side of the substrate is deposited a film 5 of material that possesses photoresist properties and in which a relief diffraction grating was made by photolithographic methods. The metal film 2 represents the front side of the sensor and is in contact with the MA medium under investigation. The grating represents the back side of the sensor, this is a phase grating and operates in transmission mode. The role of the diffraction grating consists in increasing the wave vector of light parallel to the interface and making it equal to the propagation constant of the polaritonic plasmon wave. In the bibliographic references (2, 3), which have an important degree of relevance for the present invention, this is obtained by summing with the grating vector (kx+G), as shown in Fig. 2b. For this, the grating must be very close to the metal film, below the penetration depth of the evanescent wave field. The claimed invention differs from the solutions described in references (2,3) in that the grating operates on the principle of light diffraction. It ensures the increase of the propagation angle in the substrate Θ so that the wave vector $kx=k \cdot \sin\Theta$ increases and equals the vector of the polaritonic plasmon wave. The diffraction grating operates like a prism. It no longer has to be close to the interface of the metal film and, at the same time, ensures the flatness of the plasmonic structure.

Under optimal conditions, the diffraction efficiency in the +/-1 maxima is up to 40%. The illumination of the structure is done through the back side, so it does not propagate through the environment to be investigated, which can diminish the characteristics of the sensor.

The SPR structure proposed in this invention can be realized in several variants.

Thus, a first embodiment supposes the deposition on the back side of the optical glass substrate, of a film of material with photoresist properties. The optical glass can be similar to the slide for examinations in the optical microscope. The preferred thickness of the substrate is 0.5-2.0 mm. The preferred photoresist film is deposited by centrifugation with thicknesses in the range of 2-5 μm. The technological conditions for the realization of the diffraction grating are taken from the specifications for the photoresist. According to the specifications, the exposure is done through the mask with UV light (350-450 nm). The optimal range of structure interrogation is in the range of 0.5-1.5 μm. Other materials with photoresist properties, either positive or negative, can be used. After obtaining the diffraction grating with the established parameters, the structure is mounted in a vacuum installation. The grating period is calculated from the diffraction grating equation (2). The wavelength λ=0.64 μm is selected and the preferred incidence angle is α=45°. From the plasmonic structure dyspepsia equation (1) the propagation constant and the resonance angle are calculated. We assume that the value β=60° was obtained. Substituting the values in equation (2) and considering m= -1, results: $\sin45° - \sin60° = -0.64/\Lambda$, from which $\Lambda=4.02$ μm.

If it is desired the reflection in the direction opposite to the incident ray, β= - 60°, m= +1, it results: $\sin45° - \sin(-60°) = 0.64/\Lambda$, from which it obtains $\Lambda=0.407$ μm.

The metal film is deposited using known vacuum technologies, such as thermal evaporation, magnetron sputtering, etc. The preferred material is gold or silver which have superior optical properties. The optimal thickness of the gold or silver film is in the range of 40-50 nm. The front side will be in contact with the environment subject to characterization (ambient environment). Finally, the SPR planar structure is extracted from the vacuum chamber and mounted in the plasmon-polaritonic wave light coupling device, coupling to a photodetector and realizing the SPR optical sensor.

In another embodiment, on the surface of the transparent plate 4B, by known photolithographic methods, a diffraction grating 5 (Fig. 6a) is made using a photoresist or other material sensitive in the UV spectral range and transparent in the VIS-IR range. The thin film of photoresist with thicknesses in the range of 1-8 μm is obtained by centrifugation. The optimal thickness is that which ensures maximum diffraction efficiency and depends on the period of the grating. After illuminating the film through the mask and etching, a periodic structure in relief is obtained which, being illuminated from behind, functions as a phase grating in transmission.

The thin metal film 2, usually of gold, is made on another plate 4A (Fig. 6b) which also has a flat shape. The plates 4A and 4B are made of the same material. The metal film 2 is in contact with the ambient environment MA which is a liquid in most cases. Both substrates 4A and 4B are attached with the non-deposited sides to each other using a small drop of transparent oil 6 injected at the center of the substrate and having a refractive index equal to that of the substrate. Finally, both substrates are pressed against each other, so that the drop by lamination spreads over the entire surface of the substrate. Thus, the two plates form an optically homogeneous structure and are supported by surface tension forces. The structure made up of the plates 4A and 4B is equivalent to the one proposed in the invention in which the substrate 4 is made of a single piece. During operation, only the plate 4A with the thin metal film 2 is changed, given that it is frequently damaged after contact with liquids and washing. The method has the advantage that the plate 4B with the diffraction grating remains permanently in the device, which reduces operating costs.

The process for making the SPR structure, according to the invention, consists of the following stages.

In the first stage, a substrate (Fig. 5) with both planar, smooth surfaces made of an optically transparent glass 4 is used. On one side of the substrate (we will consider it the back side) is deposited a film 5 with photoresist properties. This can be made of SU-8 specially developed for photolithographic applications and widely used in the manufacture of integrated circuits. The process of manufacturing the diffraction grating consists of several known and well-developed steps: a) centrifugal deposition of the film with the thickness necessary to obtain maximum diffraction efficiency; b) solidification of the film by baking at temperatures of 65-95 degrees Celsius; c) a mask representing the diffraction grating standard is applied over the substrate with photoresist. The mask, as a rule, is made of a chromium film; d) Through the applied mask the photoresist is exposed to light under specified conditions and presented, for example, in reference 4. e) After exposure, baking takes place again at the temperatures indicated above and development. f) the diffraction grating can also be made in the same photoresist by the method of holographic interference of two beams.

The development time is chosen from the considerations of achieving a maximum diffraction efficiency. This can reach values of up to 40%, for the first diffraction order. The light propagation angles after diffraction are governed by equation (2) presented here. For the given incidence angle $\alpha$, two diffraction directions are formed in which the intensity is maximal. These correspond to the values of the integer number m = +1 and m = -1.

The path of the rays after diffraction and reflected by the structure is shown in Fig. 4. In case 4a) this corresponds to diffraction in the maximum m = +1 the reflected light rays FR return exactly in the opposite direction to the incident ray FI. The situation is beneficial for the coupling of plasmonic sensors through optical fibers. In case b) which corresponds to m = -1 the light ray FR is reflected under the angle 2$\alpha$ to the direction of the incident ray FI. In the particular case, when a=45 degrees, the angle between the incident and reflected rays is 90 degrees, exactly as in the case of prism coupling (see Fig. 4 a, b).

In the second stage, the front side of the substrate that already contains the inscribed diffraction grating, a thin metal film with adequate optical properties is deposited by vacuum technologies in order to obtain a quality resonance curve. The technology used is a) thermal evaporation; b) electron gun scattering; or c) magnetron target scattering by discharge in inert gas. The most suitable materials are gold and silver. The film thickness is chosen from considerations of obtaining the reflection of the interrogation light close to zero at the incidence of light under the resonance angle. This is 40-50 nm depending on the wavelength used for interrogation. The film surface must be flat and with minimal roughness.

Regarding the use of immersion oil in optics, we specify that the reflection R from the interface of two homogeneous optical media, for example glass and oil, with refractive indices ns and does not obey Fresnel's law:

$$R = \frac{\left(\frac{ns}{nu}\right) - 1}{\left(\frac{ns}{nu}\right) + 1},$$

from which it follows that if $n_s = n_u$, the reflection of light is equal to zero.

Thus, these two media behave optically as a single material. In our case we have three optical media: i) substrate 4A - ii) immersion oil 6 - iii) substrate 4B with two interfaces. If the refractive indices $n_{4A} = n_u = n_{4B}$ are equal, the total reflection is zero. The structure behaves as a single homogeneous substrate 4 in Fig. 5.

The second variant of realizing the SPR structure the process of realizing the SPR structure composed of two transparent flat plates and used as a substrate assumes that the substrates 4A and 4B are joined together by immersion oil 6. This is done by injecting a small droplet into the center of the plate with a syringe (Fig. 6a) and then the plates are pressed against each other (Fig. 6b) until the droplet 6 spreads over the entire surface.

**Bibliographic references**

1. Stefan A. Maier. Plasmonics: Fundamentals and Applications 2007. Springer Science, (2007)
2. Pi S., a. a. "Dielectric-Grating-Coupled Surface Plasmon Resonance from the Back Side of the Metal Film for Ultrasensitive Sensing". IEEE Photonics J. 2016, 8, 1-7. https://www.researchgate.net/publica tion/291015709_Dielectric-Grating_Coupled_Surfa ce_Plasmon_Resonance_From_the_Back_Side_o f_the_Metal_Film_for_Ultras ensitive_Sensing#fullTextFileContent
3. Joseph S., Sarkar S., Joseph J. "Grating-Coupled Surface Plasmon-Polariton Sensing at a Flat Metal-Analyte Interface in a Hybrid-Configuration". ACS Applied Materials & Interfaces, 2020, 12 (41), pp. 46519-46529. DOI: 10.1021/acsami.0c12525.
4. Characterization of SU8 optical multimode waveguides for integrated optics and sensing on microchip devices. Article in Proceedings of SPIE - The International Society for Optical Engineering, January 2006, DOI: 10.1117/12.655667
5.https://www.cytivalifesciences.com/en/us/shop/protein-analysis/spr-label-free-analysis/spr-systems/biacore-8k-p-09826).

**Claims**

1. Planar structure with surface plasmon resonance (SPR) comprising a transparent substrate made of optical quality glass (4), which has deposited on the front, active side of the SPR sensor a thin metal film (2) in contact with the ambient medium (MA) under investigation and which constitutes the front, active side of the SPR sensor, **characterized in that** for coupling the light with the plasmon-polaritonic wave to the surface under resonance conditions, in a first embodiment of the planar structure, on the back side of the substrate in which the light source and the intensity detector of the light reflected by the SPR structure are located, a thin film (5) of material with photoresist properties is deposited on which a relief diffraction grating made by photolithographic methods, that operates on the principle of light diffraction in transmission mode, the period of the diffraction grating being calculated so as to ensure the incidence of light on the metal film (5) at an angle corresponding to the plasmon resonance angle so that the diffraction grating operates like a prism that has not to be close to the interface of the metal film (2) and ensures the flatness of the plasmonic structure, and in another embodiment, on the surface of the transparent plate (4B), it is made the diffraction grating (5) using a photoresist or other type sensitive in the UV spectral range and which is transparent in the VIS-IR range, the thin metal film (2) being made on another flat plate (4A), in which the plates (4A) and (4B) are attached with the sides without deposits to each other using a small drop of transparent oil (6) injected at the center of the substrate and which has a refractive index equal to that of the substrate, and under the conditions in which both substrates (4A) and (4B) are pressed against each other, the drop of oil (6) is spread by lamination over the entire surface of the substrate, the two plates forming an optically homogeneous structure which is supported by the surface tension forces.

2. Process for producing the planar structure of claim 1, which consists of a flat substrate of transparent optical glass over which a thin metal film (2) was obtained by vacuum deposition technologies and, respectively, of another flat substrate over which a thin film (5) possessing properties of photoresist was obtained by the spin-coating method and in which, by nano-lithography methods a relief diffraction grating was obtained, **characterized in that** it involves:

   - establishing and defining the initial conditions for the process, respectively, the material from which the film (5) with photoresist properties is made, the development time from the considerations of achieving maximum diffraction grating efficiency, the metallic film (2) material with adequate optical properties, the deposition conditions for obtaining a qualitative resonance curve, the thickness of the metallic film in order to obtain the reflection of the interrogation light close to zero at the resonant angle incidence of light;
   and then the following procedural steps:

      - in a first stage:

   - a substrate with both planar, smooth surfaces made of optically transparent glass is used;
   - on one side of the substrate, considered the back side, a film with photoresist properties is deposited;
   - the diffraction grating (5) is made and inscribed;

      - in a second stage:

   - on the front side of the substrate that already contains the inscribed diffraction grating (5), a thin metal film (2) with optical properties suitable for obtaining a quality resonance curve is deposited by vacuum technologies;
   and in the case of variant 2 of realizing the SPR structure composed of two transparent flat plates and used as a substrate according to the first stage, then the substrates (4A) and (4B) are joined together by immersion oil (6), which involves:

      - injecting a small drop of oil into the center of the plate with a syringe;
      - pressing the plates against each other until the drop of oil spreads over the entire surface.

**Amended claims in accordance with Rule 137(2) EPC.**

1. Planar structure with surface plasmon resonance (SPR) comprising a transparent substrate made of optical quality glass (4), which has deposited on the front, active side of the SPR sensor a thin metal film (2) in contact with the ambient medium (MA) under investigation and which constitutes the front, active side of the SPR sensor, **characterized in that** for coupling the light with the plasmon-polaritonic wave to the surface under resonance conditions, in a first alternative of the planar structure, on the back side of the substrate in which the light source and the intensity detector of the light reflected by the SPR structure are located, a thin film (5) of material with photoresist properties is deposited on which a relief diffraction grating made by photolithographic methods, that operates on the principle of light diffraction in transmission mode, the period of the diffraction grating being calculated so as to ensure the incidence of light on the metal film (5) at an angle corresponding to the plasmon resonance angle so that the diffraction grating operates like a prism that has not to be close to the interface of the metal film (2) and ensures the flatness of the plasmonic structure, and in another alternative, on the surface of the transparent plate (4B), it is made the diffraction grating (5) using a photoresist or other type sensitive in the UV spectral range and which is transparent in the VIS-IR range, the thin metal film (2) being made on another flat plate (4A), in which the plates (4A) and (4B) are attached with the sides without deposits to each other using a small drop of transparent oil (6) injected at the center of the substrate and which has a refractive index equal to that of the substrate, and under the conditions in which both substrates (4A) and (4B) are pressed against each other, the drop of oil (6) is spread by lamination over the entire surface of the substrate, the two plates forming an optically homogeneous structure which is supported by the surface tension forces.

2. Process for producing the planar structure of claim 1, which consists of a flat substrate of transparent optical glass over which a thin metal film (2) was obtained by vacuum deposition technologies and, respectively, of another flat substrate over which a thin film (5) possessing properties of photoresist was obtained by the spin-coating method and in which, by nano-lithography methods a relief diffraction grating was obtained, **characterized in that** it involves:

    - establishing and defining the initial conditions for the process, respectively, the material from which the film (5) with photoresist properties is made, the development time from the considerations of achieving maximum diffraction grating efficiency, the metallic film (2) material with adequate optical properties, the deposition conditions for obtaining a qualitative resonance curve, the thickness of the metallic film in order to obtain the reflection of the interrogation light close to zero at the resonant angle incidence of light;
    and then the following procedural steps:

    - in a first stage:

    - a substrate with both planar, smooth surfaces made of optically transparent glass is used;
    - on one side of the substrate, considered the back side, a film with photoresist properties is deposited;
    - the diffraction grating (5) is made and inscribed;
    - in a second stage:
    - in the case of alternative 1 of realizing the SPR structure, on the front side of the substrate that already contains the inscribed diffraction grating (5), a thin metal film (2) with optical properties suitable for obtaining a quality resonance curve is deposited by vacuum technologies;

and in the case of alternative 2 of realizing the SPR structure composed of two transparent flat plates and used as a substrate according to the first stage, then the substrates (4A) and (4B) are joined together by immersion oil (6), which involves:

    - injecting a small drop of oil into the center of the plate with a syringe;
    - pressing the plates against each other until the drop of oil spreads over the entire surface.

Fig. 1

Fig.2

Fig. 3.

Fig. 4

Fig. 5

Fig. 6

Europäisches
Patentamt
European
Patent Office
Office européen
des brevets

**EUROPEAN SEARCH REPORT**

Application Number

EP 24 02 0332

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | POPESCU AURELIAN ET AL: "Efficient Diffraction Grating Coupling of Light with Surface Plasmon Polariton Waves", 2024 ADVANCED TOPICS ON MEASUREMENT AND SIMULATION (ATOMS), IEEE, 28 August 2024 (2024-08-28), pages 105-108, XP034865895, DOI: 10.1109/ATOMS60779.2024.10921621 [retrieved on 2025-03-19] | 1,2 | INV. G01N21/552 G01N21/77 |
| Y | * paragraphs [004.] - [006.]; figure 5A * * table 1 * | 1,2 | |
| Y | US 7 835 006 B2 (NOMADICS INC [US]) 16 November 2010 (2010-11-16) * column 5, line 56 - column 6, line 4; figure 9 * | 1,2 | |
| Y | WO 2021/053042 A1 (HOFFMANN LA ROCHE [CH]; HOFFMANN LA ROCHE [US]; ETH ZUERICH [CH]) 25 March 2021 (2021-03-25) * page 34, lines 13-24; figures 8a,8b * | 1,2 | |

**TECHNICAL FIELDS SEARCHED (IPC)**

G01N

The present search report has been drawn up for all claims

| Place of search | Date of completion of the search | Examiner |
|---|---|---|
| Munich | 15 April 2025 | Consalvo, Daniela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 24 02 0332

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2025

| Patent document cited in search report | | Publication date | Patent family member(s) | | Publication date |
|---|---|---|---|---|---|
| US 7835006 | B2 | 16-11-2010 | NONE | | |
| WO 2021053042 | A1 | 25-03-2021 | CN | 114341623 A | 12-04-2022 |
| | | | EP | 4031868 A1 | 27-07-2022 |
| | | | JP | 2022548356 A | 18-11-2022 |
| | | | US | 2022397573 A1 | 15-12-2022 |
| | | | WO | 2021053042 A1 | 25-03-2021 |

EPO FORM P0459

For more details about this annex : see Official Journal of the European Patent Office, No. 12/82

## REFERENCES CITED IN THE DESCRIPTION

**Patent documents cited in the description**

- US 2008198383 A1
- WO 0142768 A1
- KR 100876608 B1
- US 2015124254 A1
- US 2008316490 A1

**Non-patent literature cited in the description**

- **STEFAN A. MAIER.** Plasmonics: Fundamentals and Applications 2007. Springer Science, 2007
- **PI S.** Dielectric-Grating-Coupled Surface Plasmon Resonance from the Back Side of the Metal Film for Ultrasensitive Sensing. *IEEE Photonics J.*, 2016, vol. 8, 1-7, https://www.researchgate.net/publication/291015709_Dielectric-Grating_Coupled_Surface_Plasmon_Resonance_From_the_Back_Side_of_the_Metal_Film_for_Ultras ensitive_Sensing#fullTextFileContent
- **JOSEPH S.** ; **SARKAR S.** ; **JOSEPH J.** Grating-Coupled Surface Plasmon-Polariton Sensing at a Flat Metal-Analyte Interface in a Hybrid-Configuration. *ACS Applied Materials & Interfaces*, 2020, vol. 12 (41), 46519-46529
- Characterization of SU8 optical multimode waveguides for integrated optics and sensing on microchip devices. *Proceedings of SPIE - The International Society for Optical Engineering*, January 2006